# EUROPEAN PATENT SPECIFICATION

(11) **EP 3 145 881 B1**
(45) Date of publication and mention of the grant of the patent: **31.07.2019**
(21) Application number: 15727210.5
(22) Date of filing: 21.05.2015
(51) Int. Cl.: C03B 23/023, C03B 23/025, C03B 29/02

(54) **RADIATION SHIELD FOR SHAPING THIN GLASS**
STRAHLUNGSABSCHIRMUNG ZUR VERFORMUNG VON DÜNNGLAS
BOUCLIER ANTI-RADIATION POUR LE FAÇONNAGE DE VERRE MINCE

(30) Priority: 23.05.2014 US 201462002563 P
(43) Date of publication of application: 29.03.2017
(73) Proprietor: Corning Incorporated, Corning, New York 14831 (US)
(72) Inventor: COSTELLO, John Joseph III, Painted Post, New York 14870 (US); JAIN, Anurag, Painted Post, New York 14870 (US); KLADIAS, Nikolaos Pantelis, Horseheads, New York 14845 (US); THOMAS, John Christopher, Elmira, New York 14905 (US)
(74) Representative: Epping - Hermann - Fischer
(86) International application number: PCT/US2015/031936
(87) International publication number: WO 2015/179617

(56) References cited:
- DE-U- 1 830 124
- US-A- 2 882 646
- US-A1- 2012 279 257
- US-B1- 6 240 746

## Description

### FIELD OF THE DISCLOSURE

The disclosure relates generally to a method and system for shaping glass structures, and more particularly to radiation shields for use in bending thin glasses.

### BACKGROUND

The ability to thermally shape and form thin glass sheets is increasingly relevant to various industries, such as the automotive industry. The production of glass panes for automobiles is a complex process, which is constantly changing due to increasingly stringent environmental and safety requirements. The demand for intricate glass shapes with high optical quality and low weight is growing as governmental regulations require increased fuel economy and reduced emissions. The ability to make automotive parts from thinner glasses may translate to lower vehicle weight, improved fuel economy, reduced emissions, and/or improved vehicle weight distribution (e.g., lower center of gravity).

Prior art methods for shaping glass include placing glass sheets on a shaping mold, conveying the glass through a furnace to uniformly heat and soften the sheets, and allowing the softened glass to sag under gravity to assume a desired shape. The shaping mold serves as a surface around which the glass sheet can be formed to the desired shape. Such conventional shaping systems may work well with traditional glasses, which are thicker, such as glasses having a thickness ranging from about 3 mm to about 6 mm. Thicker glass sheets can generally undergo the viscous deformation while avoiding what is known in the art as the "bathtub effect," where the edges of the glass show a steep falloff and the center is flat.

However, when thinner glasses (e.g., having thicknesses less than about 3 mm) are processed using these traditional methods, the glass tends to distort and stretch, which leads to excessive viscous thinning at the edges and the falling away of the bulk center of the glass under the gravitational load.

Shaping of large thin sheets of glass may be performed in a lehr that is comprised of a number of furnaces arranged in series in which the temperature of the glass sheet is gradually raised to accomplish sagging under gravity. However, the temperature differential to achieve the desired shape for thin glasses cannot be accomplished with simple variable heating in the furnace due to radiation view factors from the hot and cold zones of the furnace walls to both the center and edges of the glass. Additional means are needed to block radiation, e.g., radiation from the hot furnace zone to the glass edges and from the cold furnace zone to the center of the glass.

Accordingly, it would be advantageous to provide a method and system for shaping and tempering thinner glass sheets, more specifically a system that is able to establish a sufficient temperature differential between the edges and the center of a thin glass sheet. For example, in one embodiment, it may be advantageous to provide a system with a temperature differential such that the edges of the glass are heated to lower temperatures than the center of the glass. To reduce manufacturing costs and/or processing times, it may additionally be advantageous to provide a system that can function, at least in part, in conjunction with existing systems for bending and tempering traditional (e.g., thicker) glasses.

DE 18 30 124 U relates to an apparatus for bending glass sheets. Between the glass sheet and one or more heat sources, a protective screen is arranged.

US 2,882,646, US 6,240,746 B1 and US 2012/279257 A1 relate to glass plate bending methods and apparatuses.

### SUMMARY

The invention relates to a system for shaping a glass structure with the features of claim 1 and to a method for shaping a glass structure with the features of claim 13. The disclosure relates, in various embodiments, to systems for shaping glass structures comprising a shaping mold, a radiation heating source, and a radiation shield, wherein the radiation shield is positioned substantially between the radiation heating source and the glass structure(s), and wherein the radiation shield comprises an outer wall defining a cavity having a first opening disposed to face the glass structure(s) and a second opening disposed to face the radiation heating source.

In certain embodiments, the radiation heating source may comprise a plurality of radiant heating elements. According to various embodiments, the radiation shield may be supported by and attached to the shaping mold or a furnace.

The outer wall of the radiation shield may form a cavity having any cross-sectional shape, e.g., in some embodiments, the cross-sectional shape may be circular, ovoid, triangular, square, rectangular, rhomboid, or polygonal. In yet further embodiments, more than one radiation shield may be positioned between the glass structure(s) and the radiation heating shield, e.g., two or more radiation shields. For instance, according to a non-limiting embodiment, a second radiation shield comprising an inner wall defining a second cavity may be disposed, e.g., concentrically within the cavity defined by the outer wall of the first radiation shield.

The disclosure also relates to methods for shaping glass structures comprising positioning the glass structure(s) on a shaping mold, introducing the shaping mold and glass structure(s) into a furnace comprising a radiation heating source, and heating the glass structure(s), wherein a radiation shield is positioned substantially between the glass structure(s) and the radiation heating source, and wherein the radiation shield comprises an outer wall defining a cavity having a first opening disposed to face the glass structure(s) and a second opening disposed to face the radiation heating source.

In various embodiments, the glass structure is heated to a temperature ranging from about 400°C to about 1000°C with a residence time ranging from about 1 minute to about 60 minutes or more. According to certain non-limiting embodiments, the glass structure may have a thickness of less than about 3 mm, such as ranging from about 0.7 mm to about 1.5 mm or from about 0.3 to about 1.5 mm.

Additional features and advantages of the disclosure will be set forth in the detailed description which follows, and in part will be readily apparent to those skilled in the art from that description or recognized by practicing the methods as described herein, including the detailed description which follows, the claims, as well as the appended drawings.

It is to be understood that both the foregoing general description and the following detailed description present various embodiments of the disclosure, and are intended to provide an overview or framework for understanding the nature and character of the claims. The accompanying drawings are included to provide a further understanding of the disclosure, and are incorporated into and constitute a part of this specification. The drawings illustrate various embodiments of the disclosure and together with the description serve to explain the principles and operations of the disclosure.

### BRIEF DESCRIPTION OF THE DRAWINGS

The following detailed description can be best understood when read in conjunction with the following drawings, where like structures are indicated with like reference numerals and in which:
**FIG. 1** illustrates a system for shaping glass according to one embodiment of the disclosure;
**FIG. 2** is a deviation plot illustrating the theoretically predicted part shape obtained using prior art uniform radiation heating methods;
**FIG. 3A** is a thermal distribution illustrating a theoretical temperature differential between the edges and center of a glass structure shaped according to one embodiment of the disclosure;
**FIG. 3B** is a theoretical model illustrating the predicted part shape obtained using the differential thermal distribution of FIG. 3A;
**FIG. 3C** is a deviation plot illustrating the theoretically predicted part shape obtained using the differential thermal distribution of FIG. 3A;
**FIG. 4** is a theoretical model illustrating a system implementing a differential thermal distribution and radiation shield according to one embodiment of the disclosure;
**FIG. 5** is a plot illustrating glass temperature as a function of distance from the center of the glass using a prior art method and methods according to various embodiments of the disclosure;
**FIG. 6** is a plot illustrating glass temperature as a function of distance from the center of the glass as it relates to the ratio between the length of the radiation shield (L), and the distance between the glass structure and the radiation heating source (H);
**FIG. 7** is a theoretical model illustrating a system implementing a differential thermal distribution and two concentric radiation shields according to one embodiment of the disclosure; and
**FIG. 8** is a plot illustrating glass temperature as a function of distance from the center of the glass using a prior art method and methods according to various embodiments of the disclosure.

### DETAILED DESCRIPTION

Disclosed herein are systems and methods for shaping glass structures comprising a shaping mold, a radiation heating source, and a radiation shield, wherein the radiation shield is positioned between the radiation heating source and the glass structure(s), and wherein the radiation shield comprises an outer wall defining a cavity having a first opening disposed to face the glass structure(s) and a second opening disposed to face the radiation heating source. Exemplary glass structures include, but are not limited to, a single sheet of glass, multiple sheets of glass in a single stack, a glass-glass laminate structure, and a glass-polymer laminate structure, to name a few.

### Systems

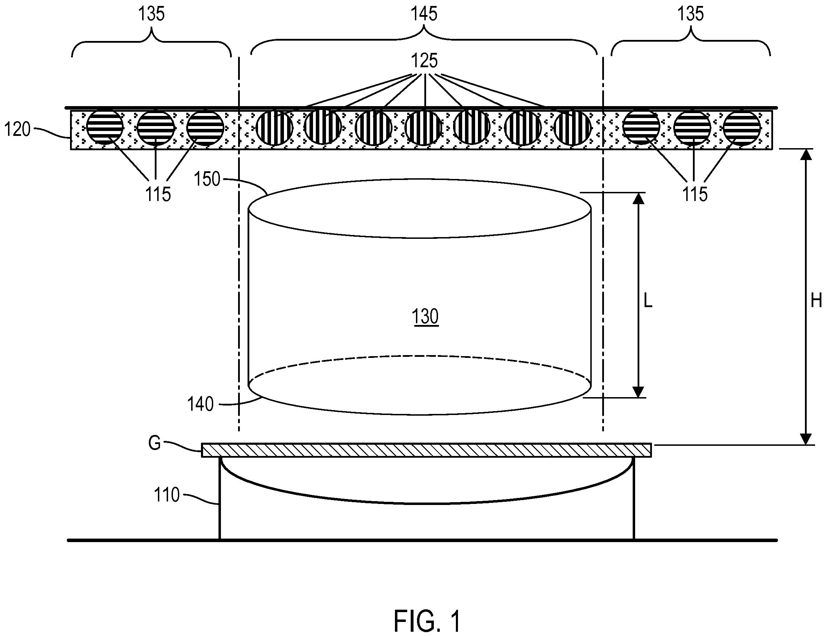

With reference to **FIG. 1****,** one embodiment of an exemplary system for shaping glass structures according to the disclosure is illustrated, which comprises a shaping mold **110** on which glass structures **G** may be positioned. The shaping mold may comprise any object that has a surface on or around which the glass can be shaped. The shaping mold may have any shape and size suitable for producing a shaped glass product for a particular application. For instance, the shaping mold may be designed so as to impart a desired curvature to a glass sheet, for example, in the case of windshields and rear or side windows for an automobile. Other shapes and configurations are envisioned and within the scope of the application. In some embodiments, the shaping mold may be a gravity bending ring mold, a fixed shape gravity ring, a multi-shape articulated gravity sag ring, a full surface mold optionally with vacuum assist. The above molds may be used, for example, with an optional pretensioning mechanism. Of course, disclosure should not be limited to gravity bending methods as embodiments described herein may also be applicable to press assist bending methods.

The glass structure **G** may be conveyed or otherwise introduced into a furnace or any other heating means comprising a radiation heating source **120.** The radiation heating source provides radiant heat to at least a portion of the glass structure. It is to be understood that while, in certain embodiments, radiant heat may be the dominant heating source, the glass heating can involve all heat transfer modes, including convection and conduction heating. For instance, in some embodiments, radiant heating may make up greater than about 50% of the overall heating, such as greater than about 60%, greater than about 70%, greater than about 80%, or greater than about 90% of the total heating. Other combinations of heating modes are envisioned and intended to fall within the scope of the application.

The radiation heating source may comprise, in certain exemplary embodiments, a plurality of radiant heating elements. The furnace or heating means may therefore be divided into two or more differential temperature zones, such as a first zone **135** comprising at least one first heating element, such as a first plurality of heating elements **115** and a second zone **145** comprising at least one second heating element, such as a second plurality of heating elements **125.** The first plurality of heating elements **115** may operate at a temperature different than the second plurality of heating elements **125,** for example, the first heating elements **115** may be cooler than the second heating elements **125,** or vice versa. The first zone **135** may be substantially aligned with a first portion of the glass structure **G** and the second zone **145** may be substantially aligned with a second portion of the glass structure **G.** In some embodiments, such as the embodiment illustrated in **FIG. 1****,** the first zone **135** may be aligned with the periphery of the glass structure **G,** and the second zone **145** may be aligned with the central region of the glass structure **G.**

Although not illustrated, several heating zones may be created using additional heating elements or pluralities of heating elements operating at differing temperatures. Thus, the depiction in **FIG. 1** should not limit the scope of the claims appended herewith. For example, several portions of the glass structure may be heated at different temperatures. In some embodiments, a central region of the glass structure may be heated to a first temperature, an outer region of the glass structure may be heated to a second temperature, and a peripheral region of the glass structure may be heated to a third temperature, these regions optionally being concentric with one another. The radiation shield(s) and heating zone(s) can be arranged in any manner so as to produce a desired temperature differential between various portions of the glass structure as necessary to make the desired glass shape part.

A radiation shield **130** can be positioned substantially between the shaping mold **110** and the radiation heating source **120.** The radiation shield may, in certain exemplary embodiments, serve to direct radiant heat away from one portion of the glass structure and toward another portion of the glass structure so as to establish a desired temperature differential between the portions of the glass structure. For instance, the radiation shield may direct radiant heat having a higher temperature away from the glass edges and toward the glass center and/or direct radiant heat having a cooler temperature away from the center of the glass and toward the glass edges. The radiation shield **130** can be positioned substantially between the radiation heating source **120** and the glass structure **G** so as to redirect the radiant heat and create the desired temperature differential.

Although not illustrated, the radiation shield may be attached to and supported by the shaping mold **120.** Alternatively, when a furnace comprises the radiation heating source, the shaping mold may be attached to and supported by the furnace, for example, attached to the roof of the furnace. The radiation shield may likewise be attached to any structure housing the radiation heating source. The radiation shield **130** may comprise an outer wall defining a cavity. The outer wall may, in some embodiments, be a continuous wall defining a cavity, e.g., an annulus. In **FIG. 1****,** the radiation shield **130** is illustrated as a circular annulus, comprising a cavity having a first opening **140** disposed to face the glass structure **G** and a second opening **150** disposed to face the radiation heating source **120.** The radiation shield **130** may, however, have any variety of shapes and cross-sections which are not illustrated in **FIG. 1****,** such as an ovoid, square, rectangular, rhomboid, or polygonal cross-sectional shape, to name a few.

The radiation shield may also have a vertical length **L.** The distance between the glass structure **G** and the radiation heating source **120** or, in certain embodiments, the height of the furnace roof, may be represented by **H.** The ratio **L/H** may vary to achieve the desired temperature differential (ΔT) between, e.g., the edges and the center of the glass structure **G** to be shaped. A higher ratio **L/H** can result in more shielding and thus a higher ΔT, whereas a lower ratio **L/H** can provide less shielding and thus a lower ΔT. In certain non-limiting embodiments, the radiation shield **130** may have a vertical axis along the vertical length **L,** which may be substantially perpendicular to the direction in which the glass structure is conveyed, e.g., into and out of a furnace.

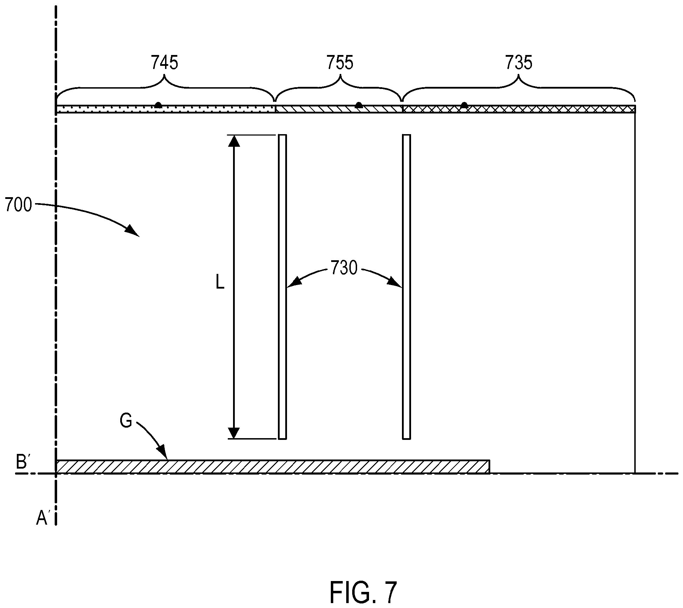

While **FIG. 1** illustrates the radiation heating source **120** as positioned above the glass structure **G,** this arrangement is not intended to be limiting, as the radiation heating source **120** could be positioned beneath the glass structure **G,** or both above and below, and variations thereof. The orientation of the glass structure and the radiation heating source may vary, so long as one or more radiation shields are present and positioned substantially between the glass structure and the radiation source. The radiation shield **130** may, in certain embodiments, block radiation from the first zone **135** to the center of the glass structure and from the second zone **145** to the edges of the glass structure. The first opening **140** may be substantially aligned with the center of the glass while the second opening **150** may be substantially aligned with the second zone **145.** Although not illustrated, one or more additional radiation shields may be used, e.g., concentrically, in coordination with various heating zones so as to create a multistep differential heating profile. This embodiment is further discussed in conjunction with **FIG. 7****.**

According to various embodiments, the outer wall of the radiation shield may comprise various materials, such as, for example, metal alloys such as INCONEL® alloys, e.g., INCONEL 600®, ceramics such as silicon carbide, refractory materials, and high temperature metals such as nickel. In certain embodiments the walls of the shield cavity may be coated with at least one reflective material. For example, gold or jade mirrors may be deposited on the shield walls, e.g., as a colloidal solution. Alternatively, a foil may be applied to the shield walls. The reflective material may have a thickness, e.g., ranging from about 1 µm to about 500 µm, such as from about 5 µm to about 400 µm, from about 10 µm to about 300 µm, from about 20 µm to about 200 µm, or from about 50µm to about 100 µm, including all ranges and subranges therebetween. By way of a non-limiting example, the deposition of gold on INCONEL® can be achieved by first spraying the shield cavity walls with a suspension of silicon carbide powder in epoxy resin followed by the vacuum deposition of gold.

The radiation shield may have a wide range of emissivity values, depending on various parameters such as the shield material, the optional reflective coating, and other parameters such as shield texture, to name a few. In some embodiments, the radiation shield may have an emissivity ranging, for example, from about 0.01 to about 1, from about 0.02 to about 0.9, from about 0.03 to about 0.8, from about 0.05 to about 0.7, from about 0.1 to about 0.6, from about 0.2 to about 0.5, or from about 0.3 to about 0.4, including all ranges and subranges therebetween. By way of a non-limiting embodiment, a radiation shield comprising electroplated nickel may have an emissivity of approximately 0.03, whereas a black body may have an emissivity of approximately 1. According to various embodiments, the shield may be machined to create a texture or microtexture on the surface(s), which may further assist in the redirection of radiation.

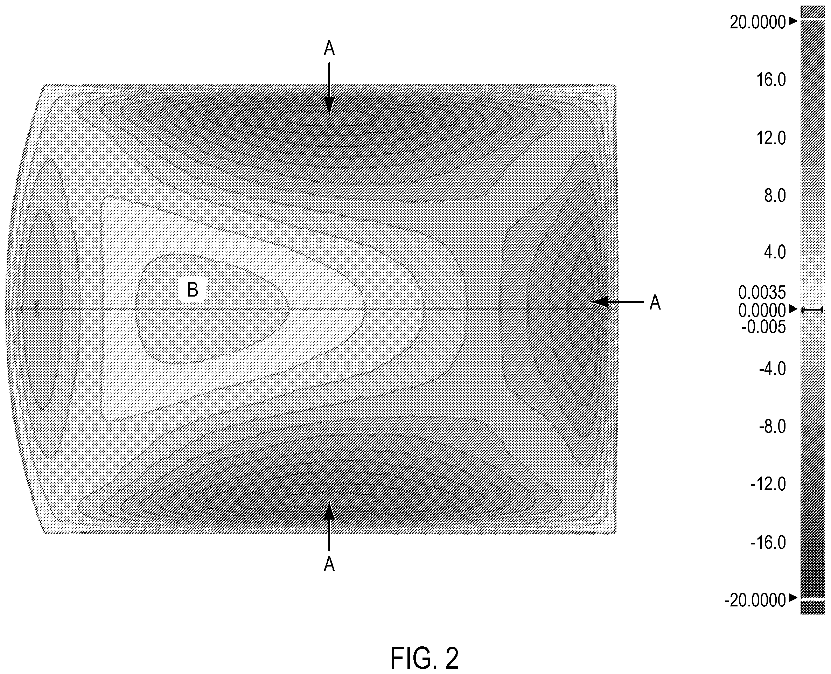

Without wishing to be bound by theory, it is believed that the systems disclosed herein, e.g., the system illustrated in **FIG. 1****,** may serve to create two or more regions on a glass structure surface having discrete temperatures with a significant differential between the temperatures of the two regions. In the case of a sag bending shaping process, such a temperature differential may be achieved, e.g., by blocking cold radiation factors from reaching the center of the glass structure and blocking hot radiation factors from reaching the edges of the glass structure. The systems disclosed herein may thus provide marked improvement in terms of achieving target shape as compared to prior art methods employing uniform heating profiles. Such prior art methods are further illustrated in **FIG. 2****,** which is a plot showing the shape deviation (mm) between the target part shape and the predicted part shape obtained by implementing a uniform heating profile for a 0.7mm thick glass structure during a sag bending process. Regions denoted by **"A"** indicate over-sagging and the region denoted by **"B"** indicates under-sagging. The deviation plot illustrates that the glass region just inside the four edges of the structure has over-sagged by as much as about 20 mm, whereas the center of the structure has the approximate target shape. This "bathtub" phenomenon is particularly prevalent when shaping thin glass structures, e.g., glass structures having thicknesses less than about 3.0 mm, such as between about 0.3 mm and about 2.0 mm, or between about 0.5 mm and about 1.5 mm, including all ranges and subranges therebetween. Modeling results for thicker glass structures, such as those having conventional thicknesses of greater than about 3.0 mm, for example, about 3.2 mm or about 5.0 mm, show that the "bathtub" effect is not as severe.

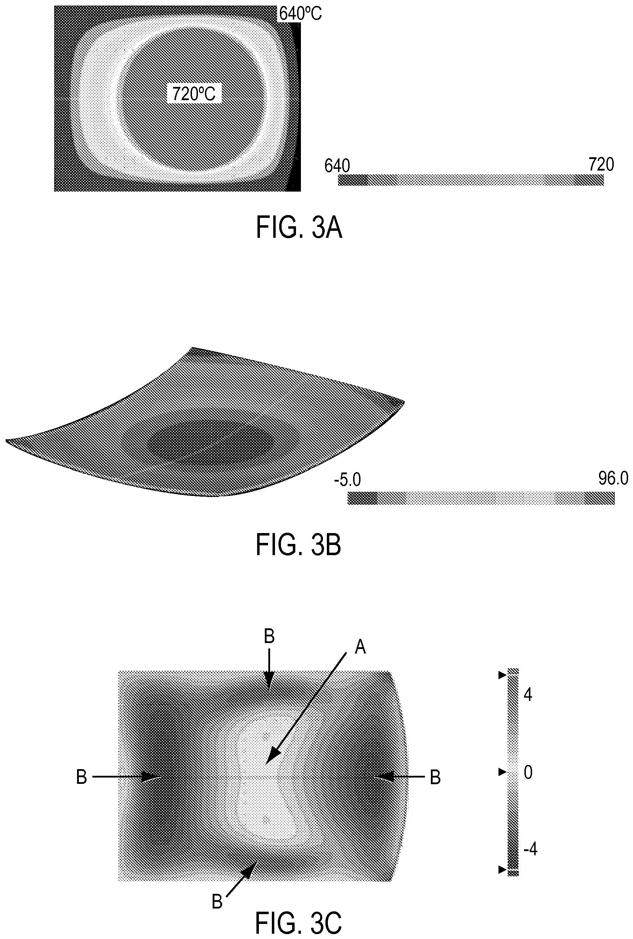

Thus, especially for thinner glasses, Applicants seek to provide shaping systems and methods implementing a differential heating profile across the glass structure. For instance, in the case of the target part shape of **FIG. 2****,** it would be advantageous to employ a differential heating profile in which the peripheral region of the glass structure is heated at a lower temperature so as to maintain higher glass viscosity and limit viscous flow, while the center region of the glass structure is heated at a higher temperature to achieve the desired shape. Such a differential heating profile is illustrated in **FIG. 3A****,** where an exemplary thermal distribution contemplates a central region of the glass structure at about 720°C and the peripheral region of the glass structure at about 640°C. Thus, a temperature differential (ΔT) of approximately 80°C exists in the theoretical model of **FIG. 3A. FIG. 3B** illustrates the predicted part shape obtained by implementing the differential heating profile of **FIG. 3A** in a sag bending process, expressed as out of plane deformation (mm). **FIG. 3C** is a plot showing the shape deviation (mm) between the target part shape and the predicted part shape obtained by implementing the differential heating profile of **FIG. 3A** for a 0.7 mm thick glass structure during a sag bending process. In **FIG. 3C** the central region **A** is at the approximate target shape and the peripheral region **B** is slightly undersagged. Thus, as compared to prior art **FIG. 1****,** there is a marked reduction of over-sagging at the periphery.

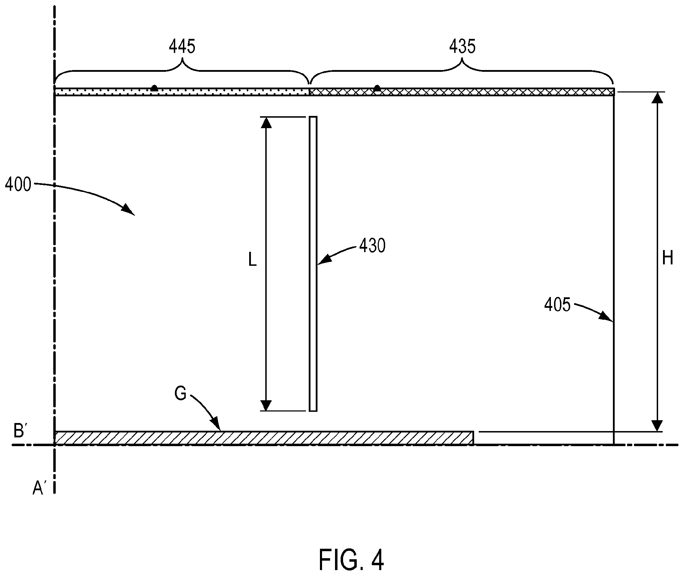

**FIG. 4** illustrates a two-dimensional thermal model created using ANSYS FLUENT software, in which a furnace **400** is divided into two zones: (i) a hot zone **445** operating at a temperature of about 650°C and (ii) a cold zone **435** operating at a temperature of about 400°C. A radiation shield **430** with a length **L** is present between the furnace top wall (comprising a radiation heating source) and the glass structure **G. H** represents the distance between the furnace top wall and the glass structure **G.** The following assumptions were made: (i) the side walls **405** of the furnace were assumed to be insulated, (ii) the initial temperature of the glass structure **G** was assumed to be about 400°C, and (iii) the residence time in the furnace **400** was assumed to be about 5 minutes. A shaping mold is not illustrated in the model but is assumed to be present. The model furthermore only illustrates one portion of the system, and symmetry is assumed to exist along lines **A'** and **B'.**

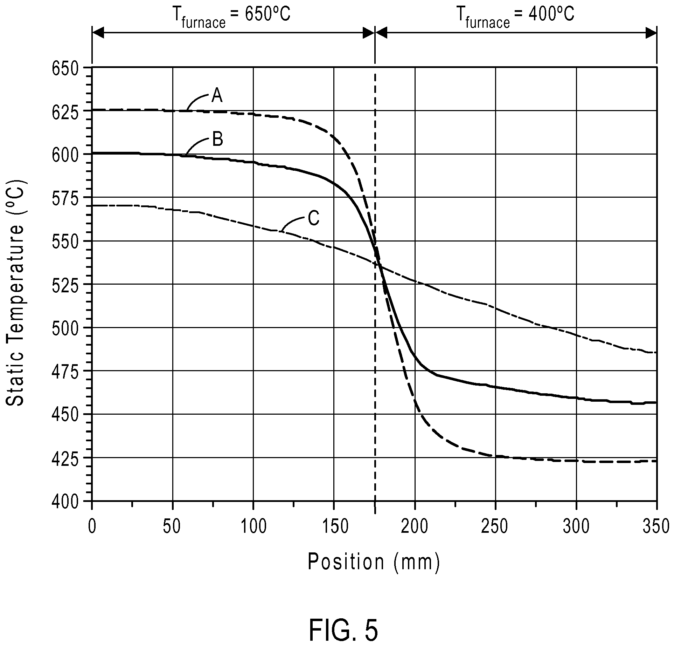

**FIG. 5** illustrates the glass surface temperature distribution using the model presented in **FIG. 4** after a 5-minute residence time. The glass temperature is plotted as a function of distance from the center of the glass. Plot **A** represents the glass temperature distribution achieved using a radiation shield with reflective walls (ε=0.1). Plot **B** represents the glass temperature distribution achieved using a radiation shield not coated with a reflective material (ε=0.9). Plot **C** represents the glass temperature distribution achieved in the absence of a radiation shield. **FIG. 5** thus demonstrates that without a radiation shield (Plot **C**), a more or less linear temperature drop from the center of the glass structure is realized, whereas the introduction of a radiation shield can create a hotter glass center and substantially cooler glass edges. Moreover, the temperature differential (ΔT) between the hot and cold regions of the glass structure can be adjusted by adjusting the reflectivity of the radiation shield walls, where a greater reflectivity (Plot **A**) results in a greater ΔT as compared to a radiation shield with no reflectivity (Plot **B**).

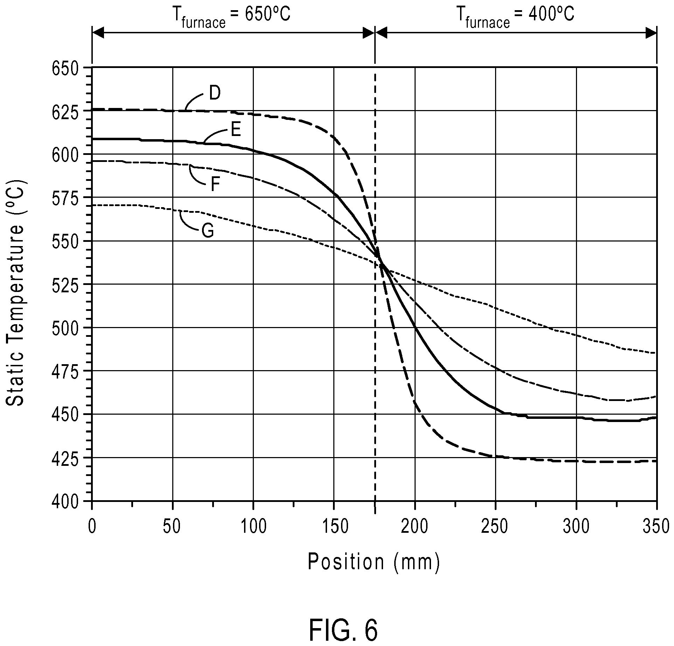

The temperature differential (ΔT) can also be adjusted by adjusting the length L of the shield relative to the distance **H** between the glass structure and the furnace top wall (or radiation heating source). **FIG. 6** demonstrates the effect of the ratio **L/H** on the glass ΔT. Plot **D** represents the glass temperature distribution achieved using a ratio L/H = 0.84. Plot **E** represents the glass temperature distribution achieved using a ratio L/H = 0.6. Plot **F** represents the glass temperature distribution achieved using a ratio L/H = 0.4. Plot **G** represents the glass temperature distribution achieved without shielding (L/H = 0). As demonstrated by **FIG. 6****,** as the length **L** of the radiation shield increases, e.g., as the ratio **L/H** increases, the sharper the distinction between the hot and cold regions generated on the glass structure and the larger the ΔT between the center and edges of the glass structure.

As discussed above, certain embodiments can employ more than one radiation shield. For example, multiple concentric radiation shields can be used in conjunction with variable heating zones to create multiple discrete temperature regions on the glass surface. **FIG. 7** illustrates one such non-limiting configuration, in which a furnace **700** is divided into three zones: (i) a hot zone **745** operating at a temperature of about 650°C, a moderate zone **755** operating at a temperature of about 500°C and (ii) a cold zone **735** operating at a temperature of about 400°C. Two concentric radiation shields **730** with a length **L** are present between the furnace top wall and the glass structure **G.** The radiation shields **730** thus may form inner and outer walls defining inner and outer cavities.

The shields **730** may be aligned so as to form radiation barriers between the hot zone **745** and the moderate zone **755** and between the moderate zone **755** and the cold zone **735.** As such, the hot zone **745** may be aligned with a central region of the glass structure **G,** whereas the moderate zone **755** may be aligned with an outer region of the glass structure **G** and the cold zone **735** may be aligned with the peripheral region of the glass structure **G,** although other configurations are envisioned and intended to fall within the scope of the disclosure. It will also be apparent to one skilled in the art that additional shields may be used in conjunction with a furnace having additional heating zones so as to create multiple discrete temperature regions on the surface of the glass structure. A shaping mold is not illustrated in the model but is assumed to be present. The model furthermore only illustrates one side of the system, and symmetry is assumed to exist along line **A'.**

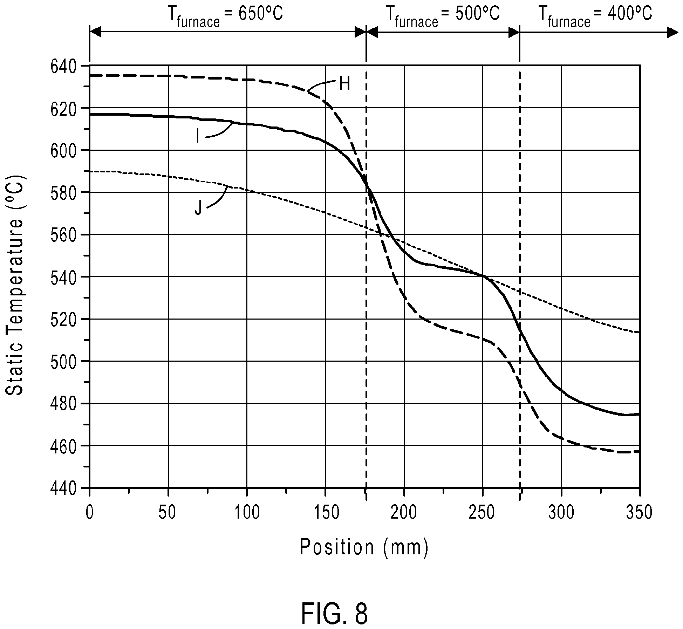

**FIG. 8** illustrates the glass surface temperature distribution using the model presented in **FIG. 7** after a 5-minute residence time. The glass temperature is plotted as a function of distance from the center of the glass. Plot **H** represents the glass temperature distribution achieved using concentric radiation shields with reflective walls (ε=0.1). Plot **I** represents the glass temperature distribution achieved using concentric radiation shields not coated with a reflective material (ε=0.9). Plot **J** represents the glass temperature distribution achieved in the absence of radiation shields. **FIG. 8** further demonstrates that without a radiation shield (Plot **J**), a more or less linear temperature drop from the center of the glass is realized, whereas the use of two concentric radiation shields can create three discrete temperature regions on the glass surface. Once again, the temperature differential (ΔT) between the different regions of the glass structure can be adjusted by adjusting the reflectivity of the radiation shield walls, where a greater reflectivity (Plot **H**) results in a greater ΔT as compared to radiation shields with no reflectivity (Plot **I**).

The systems disclosed herein may be used to shape glass structures that are thinner than those shaped by current systems. For example, the methods and systems disclosed herein may be used to shape thin glass structures having a thickness ranging from about 0.3 mm to about 3 mm, such as from about 0.5 mm to about 2 mm, or from about 0.7 mm to about 1.5 mm, including all ranges and subranges therebetween. Alternatively, the systems disclosed herein may be used to shape thicker glass structures, for example, glass structures having a thickness greater than about 3 mm, such as greater than about 4 mm, or greater than about 5 mm. As noted above, exemplary glass structures include, but are not limited to, a single sheet of glass, multiple sheets of glass in a single stack, glass-glass laminate structures, and glass-polymer laminate structures.

### Methods

According to the methods disclosed herein, a glass structure may be positioned on a shaping mold and introduced into a furnace comprising a radiation heating source. The glass structure may then be heated, e.g., to its forming or softening temperature. A radiation shield may be positioned between the glass structure and the radiation heating source, the radiation shield comprising an outer wall defining a cavity having a first opening disposed to face the glass structure and a second opening disposed to face the radiation heating source.

The glass structure may be introduced into a furnace or other heating device in any manner known in the art. According to various embodiments, the glass structure may be introduced into a furnace using a conveyer, such as a roller or belt conveyor. In certain embodiments, the glass structure may be heated to a forming or softening point, e.g., a point at which the structure can be effectively molded into a new shape. According to various embodiments, the glass structure may be heated to a temperature ranging from about 400°C to about 1000°C, such as from about 500°C to about 900°C, from about 600°C to about 800°C, or from about 650°C to about 750°C, including all ranges and subranges therebetween.

The radiation heating source may, in certain embodiments, be a differential radiation heating source and may comprise two or more radiant heating elements or pluralities of radiant heating elements operating at differing temperatures. For example, a first heating element or plurality of heating elements may operate at a temperature ranging from greater than about 600°C to about 1000°C, such as from about 650°C to about 900°C, or from about 700°C to about 800°C and a second heating element or plurality of heating elements may operate at a different temperature ranging from about 400°C to about 700°C, such as from about 450°C to about 650°C, or from about 500°C to about 600°C, including all ranges and subranges therebetween. Other combinations of temperature ranges are possible and are intended to be part of this disclosure. In such a case, the furnace can be effectively divided into two or more zones, each operating at differing temperatures.

In additional embodiments, the furnace may be divided into three or more zones, such that the differential radiation heating source comprises three or more radiant heating elements or pluralities of radiant heating elements. For instance, a first heating element or plurality of heating elements may operate at a temperature ranging from about 400°C to about 600°C, a second heating element or plurality of heating elements may operate at a different temperature ranging from about 500°C to less than about 700°C, and a third heating element or plurality of heating elements may operate at a different temperature ranging from about 600°C to about 1000°C. Other combinations of temperature ranges are possible and are intended to be part of this disclosure. Furthermore, the disclosure is not limited to any number of radiation shields, furnace zones, or radiant heating elements.

Upon introduction into the furnace or heating means, the glass structure can be heated as described above for a given residence time. The residence time may vary depending on the particular system and application. By way of non-limiting example, the residence time may range from about 1 to about 60 minutes or more, such as from about 5 to about 45 minutes, from about 6 to about 30 minutes, from about 12 to about 24 minutes, or from about 15 to about 20 minutes, including all ranges and subranges therebetween. After the given residence time, the glass structure may then exit the furnace or heating means and may undergo various additional processing steps known to those skilled in the art.

It will be appreciated that the various disclosed embodiments may involve particular features, elements or steps that are described in connection with that particular embodiment. It will also be appreciated that a particular feature, element or step, although described in relation to one particular embodiment, may be interchanged or combined with alternate embodiments in various non-illustrated combinations or permutations.

It is also to be understood that, as used herein the terms "the," "a," or "an," mean "at least one," and should not be limited to "only one" unless explicitly indicated to the contrary. Thus, for example, reference to "a radiation shield" includes examples having two or more such shields unless the context clearly indicates otherwise. Likewise, a "plurality" is intended to denote "more than one." As such, a "plurality of radiant heating elements" includes two or more such heating elements, such as three or more such heating elements, etc.

Ranges can be expressed herein as from "about" one particular value, and/or to "about" another particular value. When such a range is expressed, examples include from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

While various features, elements or steps of particular embodiments may be disclosed using the transitional phrase "comprising," it is to be understood that alternative embodiments, including those that may be described using the transitional phrases "consisting" or "consisting essentially of," are implied. Thus, for example, implied alternative embodiments to a system that comprises A+B+C include embodiments where a system consists of A+B+C and embodiments where a system consists essentially of A+B+C.

## Claims

1. A system for shaping a glass structure (G) comprising:
(a) a shaping mold (110);
(b) a radiation heating source (120); and
(c) a radiation shield (130);
wherein the glass structure (G) is positioned at a distance H from the radiation heating source (120),
wherein the radiation shield (130) is positioned between the radiation heating source (120) and the glass structure (G), and
wherein the radiation shield (130) comprises an outer wall defining a cavity having a first opening (140) disposed to face the glass structure (G) and a second opening (150) disposed to face the radiation heating source (120), the outer wall having a length L separating the first opening (140) from the second opening (150), and
wherein a ratio of the length L to the height H (L/H) is 0.4 or greater.

2. The system of claim 1, wherein the radiation heating source (120) comprises a plurality of radiant heating elements (115) and wherein the radiation shield (130) has an emissivity ranging from 0.01 to 1.

3. The system of claim 1 or claim 2, wherein the radiation heating source (120) further comprises at least one first heating zone (135) comprising at least one first radiant heating element (115) and at least one second heating zone (145) comprising at least one second radiant heating element (115) and operating at a different temperature than the first heating zone (135).

4. The system of claim 3, wherein the glass structure (G) comprises at least one first region and at least one second region, the at least one first heating zone (135) being aligned with the at least one first region and the at least one second heating zone (145) being aligned with the at least one second region.

5. The system of claim 3 or 4, wherein the first heating zone (135) operates at a temperature ranging from 600°C to 1000°C and wherein the second heating zone (145) operates at a temperature ranging from 400°C to 700°C.

6. The system of anyone of the preceding claims, further comprising a furnace (400), the furnace housing the shaping mold (110), radiation shield (130), and radiation heating source (120), wherein the radiation shield (130) is supported by and attached to the furnace (400).

7. The system of anyone of the preceding claims wherein the radiation shield (130) is supported by and attached to the shaping mold (110).

8. The system of anyone of the preceding claims, wherein the glass structure (G) is selected from the group consisting of a single sheet of glass, multiple sheets of glass in a single stack, a glass-glass laminate structure, and a glass-polymer laminate structure.

9. The system of anyone of the preceding claims, further comprising at least one second radiation shield comprising an inner wall disposed within the cavity defined by the outer wall and defining at least one second cavity having a first opening (140) disposed to face the glass structure (G) and a second opening (150) disposed to face the radiation heating source (120).

10. The system of claim 9, wherein the radiation heating further comprises at least one first heating zone (135) comprising at least one first radiant heating element (115), at least one second heating zone (145) comprising at least one second heating element (115), and at least one third heating zone comprising at least one third radiant heating element (115).

11. The system of claim 10, wherein the glass structure (G) comprises at least one first region, at least one second region and at least one third region, the at least one first heating zone (135) being aligned with the at least one first region, the at least one second heating zone (145) being aligned with the at least one second region, and the at least one third heating zone being aligned with the at least one third region.

12. The system of claim 11, wherein the at least one first heating zone (135) has a temperature ranging from 600°C to 1000°C, wherein the at least one second heating zone (145) has a temperature ranging from 500°C to 700°C, and wherein the at least one third heating zone has a temperature ranging from 400°C to 600°C.

13. A method for shaping a glass structure (G) comprising:
(a) positioning the glass structure (G) on a shaping mold (110);
(b) introducing the shaping mold (110) and glass structure (G) into a furnace (400) comprising a radiation heating source (120) at a distance H from the glass structure (G); and
(c) heating the glass structure (G);
wherein a radiation shield (130) is positioned between the glass structure (G) and the radiation heating source (120),
wherein the radiation shield (130) comprises an outer wall defining a cavity having a first opening (140) disposed to face the glass structure (G) and a second opening disposed to face the radiation heating source (120), the outer wall having a length L separating the first opening (140) from the second opening (150), a ratio of the length L to the height H (L/H) being 0.4 or greater,
wherein the radiation heating source (120) further comprises at least one first heating zone (135) comprising at least one first radiant heating element (115) and at least one second heating zone (145) comprising at least one second radiant heating element (115) and operating at a temperature different from the first heating zone (135), and,
wherein the glass structure (G) comprises at least one first region and at least one second region, the at least one first heating zone (135) being aligned with the at least one first region and the at least one second heating zone (145) being aligned with the at least one second region.

14. The method of claim 13, wherein the first heating zone (135) operates at a temperature ranging from 600°C to 1000°C and the second heating zone (145) operates at a temperature ranging from 400°C to 700°C.

15. The method of any one of claims 13-14, further comprising at least one second radiation shield, which is concentric with the first radiation shield (130).

## Patentansprüche

1. System zum Formen einer Glasstruktur (G), umfassend:
(a) eine Formgebungsform (110);
(b) eine Strahlungsheizquelle (120); und
(c) eine Strahlungsabschirmung (130);
wobei die Glasstruktur (G) in einem Abstand H von der Strahlungsheizquelle (120) angeordnet ist,
wobei die Strahlungsabschirmung (130) zwischen der Strahlungsheizquelle (120) und der Glasstruktur (G) angeordnet ist, und
wobei die Strahlungsabschirmung (130) eine äußere Wand umfasst, die einen Hohlraum definiert, der eine erste Öffnung (140), die so angeordnet ist, dass sie der Glasstruktur (G) gegenüberliegt, und eine zweite Öffnung (150), die so angeordnet ist, dass sie der Strahlungsheizquelle (120) gegenüberliegt, aufweist, wobei die äußere Wand eine Länge L aufweist, die die erste Öffnung (140) von der zweiten Öffnung (150) trennt, und
wobei ein Verhältnis der Länge L zur Höhe H (L/H) 0,4 oder mehr beträgt.

2. System nach Anspruch 1, wobei die Strahlungsheizquelle (120) eine Vielzahl von Strahlungsheizelementen (115) umfasst und wobei die Strahlungsabschirmung (130) einen Emissionsgrad im Bereich von 0,01 bis 1 aufweist.

3. System nach Anspruch 1 oder 2, wobei die Strahlungsheizquelle (120) ferner mindestens eine erste Heizzone (135), die mindestens ein erstes Strahlungsheizelement (115) umfasst, und mindestens eine zweite Heizzone (145) umfasst, die mindestens ein zweites Strahlungsheizelement (115) umfasst und mit einer anderen Temperatur als die erste Heizzone (135) arbeitet.

4. System nach Anspruch 3, wobei die Glasstruktur (G) mindestens ein erstes Gebiet und mindestens ein zweites Gebiet umfasst, wobei die mindestens eine erste Heizzone (135) mit dem mindestens einen ersten Gebiet ausgerichtet ist und die mindestens eine zweite Heizzone (145) mit dem mindestens einen zweiten Gebiet ausgerichtet ist.

5. System nach Anspruch 3 oder 4, wobei die erste Heizzone (135) mit einer Temperatur im Bereich von 600°C bis 1000°C arbeitet und wobei die zweite Heizzone (145) mit einer Temperatur im Bereich von 400°C bis 700°C arbeitet.

6. System nach einem der vorhergehenden Ansprüche, ferner umfassend einen Ofen (400), wobei der Ofen die Formgebungsform (110), die Strahlungsabschirmung (130) und die Strahlungsheizquelle (120) beherbergt, wobei die Strahlungsabschirmung (130) von dem Ofen (400) getragen wird und an ihm befestigt ist.

7. System nach einem der vorhergehenden Ansprüche, wobei die Strahlungsabschirmung (130) von der Formgebungsform (110) getragen wird und an ihr befestigt ist.

8. System nach einem der vorhergehenden Ansprüche, wobei die Glasstruktur (G) aus der Gruppe ausgewählt ist, die aus einer einzigen Glasscheibe, mehreren Glasscheiben in einem einzigen Stapel, einem Glas-Glas-Laminatgebilde und einem Glas-Polymer-Laminatgebilde besteht.

9. System nach einem der vorhergehenden Ansprüche, ferner umfassend mindestens eine zweite Strahlungsabschirmung, die eine innere Wand umfasst, die in dem von der äußeren Wand definierten Hohlraum angeordnet ist und mindestens einen zweiten Hohlraum definiert, der eine erste Öffnung (140), die so angeordnet ist, dass sie der Glasstruktur (G) gegenüberliegt, und eine zweite Öffnung (150) aufweist, die so angeordnet ist, dass sie der Strahlungsheizquelle (120) gegenüberliegt.

10. System nach Anspruch 9, wobei die Strahlungsheizung ferner mindestens eine erste Heizzone (135), die mindestens ein erstes Strahlungsheizelement (115) umfasst, mindestens eine zweite Heizzone (145), die mindestens ein zweites Heizelement (115) umfasst, und mindestens eine dritte Heizzone umfasst, die mindestens ein drittes Strahlungsheizelement (115) umfasst.

11. System nach Anspruch 10, wobei die Glasstruktur (G) mindestens ein erstes Gebiet, mindestens ein zweites Gebiet und mindestens ein drittes Gebiet umfasst, wobei die mindestens eine erste Heizzone (135) mit dem mindestens einen ersten Gebiet ausgerichtet ist, die mindestens eine zweite Heizzone (145) mit dem mindestens einen zweiten Gebiet ausgerichtet ist und die mindestens eine dritte Heizzone mit dem mindestens einen dritten Gebiet ausgerichtet ist.

12. System nach Anspruch 11, wobei die mindestens eine erste Heizzone (135) eine Temperatur im Bereich von 600°C bis 1000°C aufweist, wobei die mindestens eine zweite Heizzone (145) eine Temperatur im Bereich von 500°C bis 700°C aufweist und wobei die mindestens eine dritte Heizzone eine Temperatur im Bereich von 400°C bis 600°C aufweist.

13. Verfahren zum Formen einer Glasstruktur (G), umfassend:
(a) Positionieren der Glasstruktur (G) auf einer Formgebungsform (110);
(b) Einführen der Formgebungsform (110) und der Glasstruktur (G) in einen Ofen (400), der eine Strahlungsheizquelle (120) in einem Abstand H von der Glasstruktur (G) umfasst; und
(c) Erwärmen der Glasstruktur (G);
wobei eine Strahlungsabschirmung (130) zwischen der Glasstruktur (G) und der Strahlungsheizquelle (120) angeordnet ist,
wobei die Strahlungsabschirmung (130) eine äußere Wand umfasst, die einen Hohlraum definiert, der eine erste Öffnung (140), die so angeordnet ist, dass sie der Glasstruktur (G) gegenüberliegt, und eine zweite Öffnung, die so angeordnet ist, dass sie der Strahlungsheizquelle (120) gegenüberliegt, aufweist, wobei die äußere Wand eine Länge L aufweist, die die erste Öffnung (140) von der zweiten Öffnung (150) trennt, wobei ein Verhältnis der Länge L zur Höhe H (L/H) 0,4 oder mehr beträgt,
wobei die Strahlungsheizquelle (120) ferner mindestens eine erste Heizzone (135), die mindestens ein erstes Strahlungsheizelement (115) umfasst, und mindestens eine zweite Heizzone (145) umfasst, die mindestens ein zweites Strahlungsheizelement (115) umfasst und mit einer anderen Temperatur als die erste Heizzone (135) arbeitet, und
wobei die Glasstruktur (G) mindestens ein erstes Gebiet und mindestens ein zweites Gebiet umfasst, wobei die mindestens eine erste Heizzone (135) mit dem mindestens einen ersten Gebiet ausgerichtet ist und die mindestens eine zweite Heizzone (145) mit dem mindestens einen zweiten Gebiet ausgerichtet ist.

14. Verfahren nach Anspruch 13, wobei die erste Heizzone (135) mit einer Temperatur im Bereich von 600°C bis 1000°C arbeitet und die zweite Heizzone (145) mit einer Temperatur im Bereich von 400°C bis 700°C arbeitet.

15. Verfahren nach einem der Ansprüche 13 und 14, ferner umfassend mindestens eine zweite Strahlungsabschirmung, die konzentrisch zur ersten Strahlungsabschirmung (130) ist.

## Revendications

1. Système de mise en forme d'une structure en verre (G) comprenant :
(a) un moule de mise en forme (110) ;
(b) une source de chauffage par rayonnement (120) ; et
(c) une protection contre les rayonnements (130) ;
la structure en verre (G) étant positionnée à une distance H de la source de chauffage par rayonnement (120),
la protection contre les rayonnements (130) étant positionnée entre la source de chauffage par rayonnement (120) et la structure en verre (G) et
la protection contre les rayonnements (130) comprenant une paroi externe définissant une cavité possédant une première ouverture (140) disposée de façon à faire face à la structure en verre (G) et une deuxième ouverture (150) disposée de façon à faire face à la source de chauffage par rayonnement (120), la paroi externe possédant une longueur L séparant la première ouverture (140) de la deuxième ouverture (150) et
un rapport de la longueur L à la hauteur H (L/H) étant de 0,4 ou plus.

2. Système selon la revendication 1, la source de chauffage par rayonnement (120) comprenant une pluralité d'éléments chauffants radiants (115) et la protection contre les rayonnements (130) possédant une émissivité allant de 0,01 à 1.

3. Système selon la revendication 1 ou la revendication 2, la source de chauffage par rayonnement (120) comprenant en outre au moins une première zone de chauffage (135) comprenant au moins un premier élément chauffant radiant (115) et au moins une deuxième zone de chauffage (145) comprenant au moins un deuxième élément chauffant radiant (115) et fonctionnant à une température différente de celle de la première zone de chauffage (135).

4. Système selon la revendication 3, la structure en verre (G) comprenant au moins une première région et au moins une deuxième région, ladite au moins une première zone de chauffage (135) étant alignée sur ladite au moins une première région et ladite au moins une deuxième zone de chauffage (145) étant alignée sur ladite au moins une deuxième région.

5. Système selon la revendication 3 ou 4, la première zone de chauffage (135) fonctionnant à une température allant de 600°C à 1000°C et la deuxième zone de chauffage (145) fonctionnant à une température allant de 400°C à 700°C.

6. Système selon l'une quelconque des revendications précédentes, comprenant en outre un four (400), le four logeant le moule de mise en forme (110), une protection contre les rayonnements (130) et une source de chauffage par rayonnement (120), la protection contre les rayonnements (130) étant supportée par et fixée au four (400).

7. Système selon l'une quelconque des revendications précédentes, la protection contre les rayonnements (130) étant supportée par et fixée au moule de mise en forme (110).

8. Système selon l'une quelconque des revendications précédentes, la structure en verre (G) étant choisie dans le groupe constitué par une seule feuille de verre, de multiples feuilles de verre en un seul empilement, une structure stratifiée verre-verre et une structure stratifiée verre-polymère.

9. Système selon l'une quelconque des revendications précédentes, comprenant en outre au moins une deuxième protection contre les rayonnements comprenant une paroi interne disposée à l'intérieur de la cavité définie par la paroi externe et définissant au moins une deuxième cavité possédant une première ouverture (140) disposée de façon à faire face à la structure en verre (G) et une deuxième ouverture (150) disposée de façon à faire face à la source de chauffage par rayonnement (120).

10. Système selon la revendication 9, le chauffage par rayonnement comprenant en outre au moins une première zone de chauffage (135) comprenant au moins un premier élément chauffant radiant (115), au moins une deuxième zone de chauffage (145) comprenant au moins un deuxième élément chauffant (115) et au moins une troisième zone de chauffage comprenant au moins un troisième élément chauffant radiant (115).

11. Système selon la revendication 10, la structure en verre (G) comprenant au moins une première région, au moins une deuxième région et au moins une troisième région, ladite au moins une première zone de chauffage (135) étant alignée sur ladite au moins une première région, ladite au moins une deuxième zone de chauffage (145) étant alignée sur ladite au moins une deuxième région et ladite au moins une troisième zone de chauffage étant alignée sur ladite au moins une troisième région.

12. Système selon la revendication 11, ladite au moins une première zone de chauffage (135) possédant une température allant de 600°C à 1000°C, ladite au moins une deuxième zone de chauffage (145) possédant une température allant de 500°C à 700°C et ladite au moins une troisième zone de chauffage possédant une température allant de 400°C à 600°C.

13. Procédé de mise en forme d'une structure en verre (G) comprenant :
(a) le positionnement de la structure en verre (G) sur un moule de mise en forme (110) ;
(b) l'introduction du moule de mise en forme (110) et de la structure en verre (G) dans un four (400) comprenant une source de chauffage par rayonnement (120) à une distance H de la structure en verre (G) ; et
(c) le chauffage de la structure en verre (G) ;
une protection contre les rayonnements (130) étant positionnée entre la structure en verre (G) et la source de chauffage par rayonnement (120),
la protection contre les rayonnements (130) comprenant une paroi externe définissant une cavité possédant une première ouverture (140) disposée de façon à faire face à la structure en verre (G) et une deuxième ouverture disposée de façon à faire face à la source de chauffage par rayonnement (120), la paroi externe possédant une longueur L séparant la première ouverture (140) de la deuxième ouverture (150), un rapport de la longueur L à la hauteur H (L/H) étant de 0,4 ou plus,
la source de chauffage par rayonnement (120) comprenant en outre au moins une première zone de chauffage (135) comprenant au moins un premier élément chauffant radiant (115) et au moins une deuxième zone de chauffage (145) comprenant au moins un deuxième élément chauffant radiant (115) et fonctionnant à une température différente de celle de la première zone de chauffage (135) et
la structure en verre (G) comprenant au moins une première région et au moins une deuxième région, ladite au moins une première zone de chauffage (135) étant alignée sur ladite au moins une première région et ladite au moins une deuxième zone de chauffage (145) étant alignée sur ladite au moins une deuxième région.

14. Procédé selon la revendication 13, la première zone de chauffage (135) fonctionnant à une température allant de 600°C à 1000°C et la deuxième zone de chauffage (145) fonctionnant à une température allant de 400°C à 700°C.

15. Procédé selon l'une quelconque des revendications 13 à 14, comprenant en outre au moins une deuxième protection contre les rayonnements, qui est concentrique par rapport à la première protection contre les rayonnements (130).
